**Europäisches Patentamt**

**European Patent Office**

**Office européen des brevets**

(19)

(11) Veröffentlichungsnummer: **0 325 110**
**A1**

# EUROPÄISCHE PATENTANMELDUNG

(12)

(21) Anmeldenummer: **89100111.7**

(22) Anmeldetag: **05.01.89**

(51) Int. Cl.⁴: **F16B 7/00 , E06B 3/96**

(30) Priorität: **22.01.88 DE 3801772**

(43) Veröffentlichungstag der Anmeldung:
**26.07.89 Patentblatt 89/30**

(84) Benannte Vertragsstaaten:
**AT BE CH DE ES FR GB IT LI NL**

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al**
**Kurfürstenstrasse 32**
**D-6700 Ludwigshafen(DE)**

(54) **Verbindungsanordnung.**

(57) Eine Verbindungsanordung mit Profilteilen (2, 3) enthält zumindest in einer Hohlkammer (4, 5) des einen Profilteils (2) ein Verbindungselement (20), mit welchem die Verbindung mit dem anderen Profilteil (3) erfolgt. Es soll die Aufgabe gelöst werden, mit geringem Fertigungsaufwand eine funktionssichere Verbindung zu schaffen, wobei eine Nachbehandlung der Oberflächen im Verbindungsbereich vermieden werden soll. Es wird vorgeschlagen, daß das Verbindungselement (20) mit dem Steg (12) des ersten Profilteils (2) fest verbunden ist und vor dem Schweißen über dessen Stirnfläche (22) mit einer Länge (30) vorsteht und daß nach dem Schweißen die Schweißzone (32) in der Hohlkammer (5) des zweiten Profilteils (3) angeordnet ist und zweckmäßig zu den aneinanderliegenden Stirnflächen (20, 22) der Profilteile (2, 3) einen Abstand (33) aufweist.

## Fig 3

## Verbindungsanordnung

Die Erfindung bezieht sich auf eine Verbindungsanordnung von Profilteilen, insbesondere eines Rahmens eines Schrankes oder einer Trennwand für ein Dusch- oder Badezimmer, enthaltend wenigstens einen in einer Hohlkammer zumindest des einen Profilteiles angeordneten Steg und ferner ein Verbindungselement, welchem der andere Profilteil und der Steg verbunden sind.

Aus der US-PS 46 53 127 ist eine Anordnung von zwei Profilteilen nachgewiesen, die als Hohlkammerprofilschienen ausgebildet sind und im Inneren der Hohlkammer wenigstens einen Steg mit einem Schraubkanal aufweisen. Um die beiden Profilteile unter einem rechten Winkel miteinander zu verbinden, wird in die eine Profilschiene orthogonal zur Längsrichtung eine Bohrung für das Verbindungselement eingebracht, welches als Schraube ausgebildet ist in den Schraubkanal des anderen Profilteiles eingreift. Dem genannten Schraubkanal ist ferner ein aus Kunststoff bestehender Eckverbinder zugeordnet, der unter anderem zum Überdecken von Schnittkanten der miteinander zu verbindenden Profilschienen dient. Infolge von Fertigungs-toleranzen können im Verbindungsbereich zwischen den Profilschienen Spalte auftreten, die mit einem derartigen Eckverbinder ausgeglichen werden können. Der Fertigungs- und Montageaufwand ist nicht unerheblich.

Ferner ist aus der US-PS 45 27 364 eine Verbindungsanordnung, und zwar in Form einer Eckverbindung, von zwei Profilschienen nachgewiesen, der in die Hohlkammern der beiden miteinander zu verbindenden Profilschienen mit seinen Schenkeln eingreift. Eine der Profilschienen weist ferner einen Steg auf, der in eine Bohrung der anderen Profilschiene eingreift und mittels einer Schraube mit dem Eckverbinder verschraubt ist. Mit dieser Verbindungsanordnung wird eine gute Stabilität und Verwindungssteifigkeit erreicht, doch ist auch hierbei der Fertigungsaufwand nicht unerheblich.

Aus dem deutschen Gebrauchsmuster 74 27 039 ist eine Verbindungsanordnung für zwei Profilteile bekannt, die im rechten Winkel miteinander verbunden sind. Die Stirnflächen der Profilteile sind jeweils in einem Winkel von 45° bezüglich zur jeweiligen Längsachse geneigt angeordnet. Bei einer ersten Ausführungsform erfolgt die Verbindung mittels eines Steckelementes, das mit Preßsitz in Kanäle im Inneren der Profilteile eingeschoben ist. Die Belastbarkeit einer derartigen Verbindung ist nicht allzu hoch und es besteht die Gefahr, daß nach einem Lockern des Steckelementes die Verbindungsanordnung den Anforderungen nicht mehr genügt. In einer weiteren Ausführungsform erfolgt daher die Verbindung mittels einer Schraube, welche durch eine Bohrung an der Außenseite des einen Profilteiles hindurchgeführt ist und in den Schraubkanal des anderen Profilteils eingeschraubt ist. Das Herstellen einer derartigen Schraubverbindung muß in der Praxis manuell durchgeführt werden, wodurch ein entsprechender Personal- und Zeitaufwand erforderlich ist. Auch ist der Schraubenkopf an der Außenseite des einen Profilteiles sichtbar und für das Aussehen einer solchen Verbindungsanordnung nachteilig.

Ferner ist aus dem deutschen Gebrauchsmuster 19 88 819 ein Bauteilsatz bekannt, dessen Profilteile durch Abbrennschweißen miteinander verbunden sind. Die Profilteile weisen bevor sie miteinander verbunden werden in ihren Stirnflächen vorstehende Vorsprünge auf. Diese Vorsprünge sind an den Stirnflächen derart angeordnet, daß beim Herstellen der Verbindung durch das Abbrennschweißen an den Stirnflächen Schweißwulste entstehen. Die Schweißnähte sind in den Bereichen angeordnet, welche nach dem Verschweißen von außen her leicht zugänglich sind, damit die Schweißwulste und Schweißspritzer in einem nachfolgenden Arbeitsgang entfernt werden können. Diese Nachbehandlung der Schweißzonen führt zu einem zusätzlichen Arbeits- und Fertigungsaufwand. Ferner ist es in der Praxis kaum zu vermeiden, daß beim Abbrennschweißen Schweißkrater entstehen, die nach dem Abschleifen eines Schweißwulstes besonders nachteilig an der Außenseite der Verbindungsanordnung sichtbar sind und gegebenenfalls zusätzliche Maßnahmen, wie Ausfüllen mit Spachtelmassen, Lack oder dergleichen, erfordern.

Der Erfindung liegt daher die Aufgabe zugrunde, eine Verbindungsanordnung vorzuschlagen, die eine funktionssichere Verbindung der Profilteile gewährleistet und andererseits mit einem geringen Zeit- und/oder Kostenaufwand hergestellt werden kann. Die Profilteile sollen beim Herstellen der Verbindung in ihrer Form und/oder der Oberflächenbeschaffenheit weitgehend unbeeinträchtigt bleiben und eine Nachbehandlung im Verbindungsbereich soll vermieden werden. Die Profilteile sollen nach dem Herstellen der Verbindung die jeweils gewünschte geometrische Ausrichtung zueinander exakt einhalten, wobei im Verbindungsbereich Spalte zwischen den Profilschienen ebenso vermieden werden sollen wie durch Verformung oder dergleichen auftretende Materialanhäufungen.

Die Lösung dieser Aufgabe erfolgt gemäß dem Kennzeichen des Patentanspruchs 1 derart, daß das Verbindungselement mit dem Steg des ersten Profilteiles fest verbunden ist und von dessen Stirnfläche beabstandet ist und bevorzugt in axialer Richtung vorsteht, daß das Verbindungselement in der Hohlkammer des zweiten Profilteils über eine Schweißzone mit dem Steg des zweiten Profilteils verbunden ist und daß die in der Hohlkammer des zweiten Profilteils angeordnete Schweißzone zu den insbesondere aneinanderliegenden Stirnflächen der Außenwände der beiden Profilteile bevorzugt in Richtung der Längsachse des zweiten Profilteils einen Abstand aufweist.

Die vorgeschlagene Verbindungsanordnung gewährleistet eine funktionssichere Verbindung der Profilteile, die mit ihren Stirnflächen fest und/oder dicht aneinander liegen ohne eine Schweißnaht aufzuweisen. Die Verbindungsanordnung kann mit einem geringen Kosten- und Zeitaufwand hergestellt werden, wobei eine Nachbehandlung der sichtbaren Außenflächen oder der Außenwände der Profilteile nicht erforderlich ist. Die durch Stumpfschweißen oder Abbrennschweißen hergestellte Schweißnaht liegt im Inneren der Hohlkammer und ist nach außen hin nicht sichtbar. Zur Vorbereitung der Schweißung kann in einen Schraubkanal des Steges des ersten Profilteils das Verbindungselement in Form eines Bolzens eingeschraubt werden, der über die Stirnfläche des Profilteiles vorsteht. Der Bolzen kann auch auf andere Weise, insbesondere durch Einpressen oder Schweißen, mit dem einen Profilteil verbunden sein. Der Bolzen kann eine kreisförmige, eckige oder sonstige Querschnittsfläche aufweisen. Ferner kann der Profilteil von einem Ende her in der Weise gekürzt werden, daß nur noch der Steg stehen bleibt und das vorstehende Verbindungselement bildet. Die Schweißzone weist zu den Stirnflächen der Außenwände einen Abstand auf, so daß beim Schweißen das plastische Material aus der Schweißzone nicht an die Stirnflächen gelangen kann, wodurch das ordnungsgemäße Aneinanderlegen der Stirnflächen beider Profilteile in Frage gestellt wäre. Die Schweißzone weist ferner zweckmäßig auch zu den Außenwänden der Profilteile einen Abstand auf. Damit wird vermieden, daß beim Schweißen durch das heiße, geschmolzene Material des Verbindungselements sowie des Steges des zweiten Profilteiles die Außenwände des zweiten Profilteiles in unzulässiger Weise erwärmt oder gar verformt werden. Die Größe der Schweißzone und der Abstand der Schweißzone zu den Innenflächen der Außenwände werden aufeinander abgestimmt, so daß beim Schweißen eine unzulässig hohe Erwärmung der Außenwände der Profilteile sicher vermieden wird. Die miteinander zu verbindenden Profil teile werden in dem nachfolgenden Verfahrensschritt in geeigneter Weise zueinander ausgerichtet und an die Elektroden eines hier nicht weiter zu erläuternden elektrischen Schweißgerätes angeschlossen. Die beiden Profilteile werden nachfolgend aneinander geschoben, und durch den fließenden Schweißstrom schmilzt bzw. erweicht das Material vom Steg und/oder vom Bolzen, daß nach Art einer Stumpfschweißung und insbesondere einer Abbrennschweißung die Schweißverbindung hergestellt wird. Wesentlich ist für diesen Verfahrensschritt, daß die beiden Profilteile beim Schweißen gegeneinander gedrückt werden und im Verbindungsbereich der Stege eine Materialanhäufung des geschmolzenen Materiales entsteht. Da der Steg bzw. der Bolzen im Inneren der Hohlkammer der Profilteile angeordnet ist, werden die Außenflächen der Profilteile beim Schweißen in keiner Weise beeinträchtigt und eine Nachbehandlung nach Herstellung der Schweißverbindung ist nicht erforderlich.

Wesentlich ist darüber hinaus für die Herstellung auch die Tatsache, daß der Schweißstrom abgeschaltet wird, bevor die Stirnflächen der Profilteile einen vorgegebenen Abstand zueinander erreicht haben. Hierdurch wird vermieden, daß sich ein Lichtbogen zwischen den Stirnflächen der Außenwände ausbildet, der auch zu einem Verschweißen der Außenwände führen könnte. Die Profilteile werden nach dem Ausschalten des Schweißstromes noch weiter aufeinander zubewegt, bis die Stirnflächen zumindest näherungsweise aneinander liegen. In jedem Falle erfolgt durch das Erkalten der Schweißzone ein Schrumpfen derart, daß anschließend die Stirnflächen aneinander liegen. Das Abschalten des Schweißstromes erfolgt definiert, wenn die Stirnflächen der beiden aufeinander zubewegten Profilteile einen vorgegebenen Abstand aufweisen, damit einerseits eine feste und/oder dichte Anlage der Stirnflächen gewährleistet wird und andererseits keine zu starke Verspannung im Verbindungsbereich eintritt.

In einer zweckmäßigen Ausgestaltung wird der Steg des zweiten Profilteils von der Stirnfläche her um einen bestimmten Betrag gekürzt; der Steg endet in einem entsprechenden Abstand vor der Stirnfläche. Die Länge, mit welcher das Verbindungselement über die Stirnfläche der ersten Profilschiene vorsteht, ist in vorgegebener Weise größer als die Tiefe, in welcher der Steg des zweiten Profilteils vor dessen Stirnfläche endet. Beim Verschweißen des Verbindungselements mit dem Steg des zweiten Profilteils schmilzt sowohl das Ende von dem Verbindungselement als auch das Ende vom Steg des zweiten Profilteils, wobei durch das derart plastisch und flüssig gewordene Material die Schweißzone gebildet wird. Nach Beendigung der Verschweißung liegt die Schweißzone, also die Mittenebene der Schweißzone, in einem Abstand zu den Stirnflächen, wobei dieser Abstand kleiner ist als die Länge des Verbindungselements. Bei einer derart hergestellten Verbindungsanordnung liegt die Schweißzone bzw. der Verbindungsbereich beabstandet zu den dicht aneinander liegenden Stirnflächen der Außenwände der beiden Profilteile, innerhalb des zweiten Profilteils. Auf diese Weise wird sichergestellt, daß beim Schweißen das plastische und/oder flüssigwerdende Material nicht in den Bereich der Stirnflächen gelangen kann und eine ordnungsgemäße Verbindung verhindert.

Die vorgeschlagene Verbindungsanordnung kann für Profilteile mit gleicher Ausrichtung der jeweiligen Längsachsen ebenso vorgesehen werden, wie für Profilteile, deren Längsachsen einen vorgegebenen Winkel, beispielsweise 90° oder auch kleiner, zueinander aufweisen. Die genannten Profilteile können einzelne auf Maß geschnittene Profilschienen sein, die zu einem Rahmen, insbesondere eines Spiegelschrankes oder einer Duschtrennwand zusammengesetzt sind. Auf diese Weise kann ein Rahmen ohne zusätzliche Eckverbinder, Schrauben oder dergleichen, bei einem äußerst geringen Fertigungs- und Montageaufwand hergestellt werden.

Die Erfindung wird nachfolgend anhand der in der Zeichnung dargestellten Ausführungsbeispiele näher erläutert. Es zeigen:

Fig. 1 einen Schnitt durch ein Profilteil quer zu deren Längsachse

Fig. 2 einen Schnitt durch zwei Profilteile vor dem Verschweißen,

Fig. 3 einen Schnitt durch die fertige Verbindungsanordnung,

Fig. 4 einen Schnitt durch eine Alternative zu Fig. 2,

Fig. 5 eine schematische Ansicht einer weiteren Ausführungsform,

Fig. 6 vergrößert einen Bolzen vor dem Einschrauben in einen der Schraubkanäle eines Profilteiles.

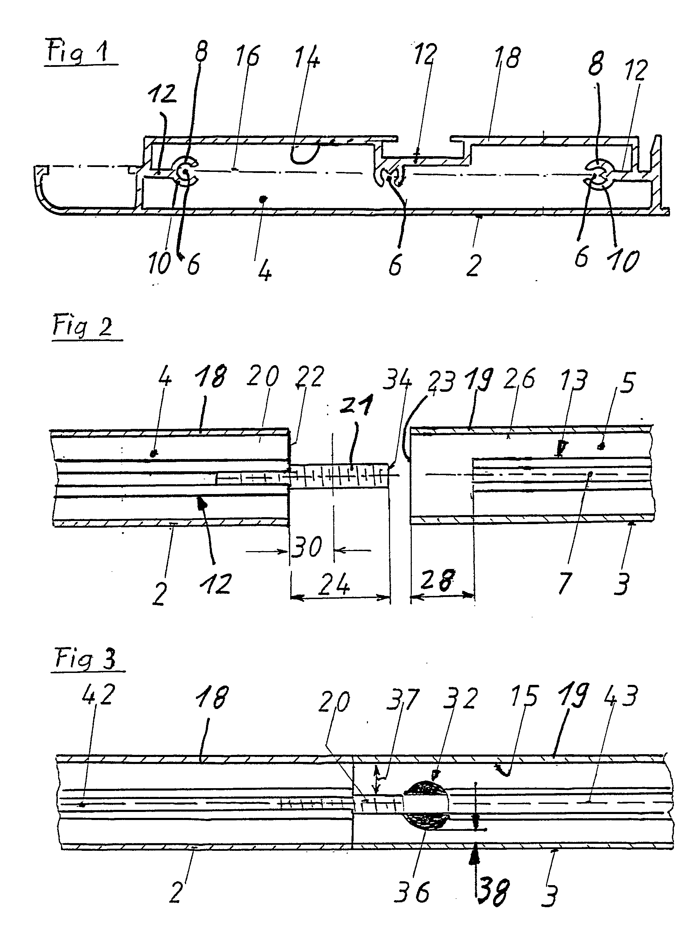

Fig. 1 zeigt einen Schnitt quer zur Längsachse eines Profilteiles 2, der als eine Hohlkammer-Profilschiene ausgebildet ist. Im Inneren weist der Profilteil 2 eine Hohlkammer 4 auf, in welcher drei Schraubkanäle 6 vorhanden sind. Diese Schraubkanäle sind in gewohnter Weise ausgebildet und enthalten jeweils zwei Schenkel 8, 10, zwischen welchen in gewohnter Weise eine Schraube oder ein Bolzen mit einem Außengewinde eingeschraubt werden kann. Die Schraubkanäle 6 sind jeweils Bestandteil von Stegen 12, welche von der Innenwandung 14 der äußeren Wand 18 des Profilteiles 2 abstehen. Der Profilteil 2 weist einen flachen, im wesentlichen rechteckartigen Querschnitt auf und sämtliche drei Schraubkanäle 6 sind in der Mittenebene 16 angeordnet. Die Stege 12 mit den Schraubkanälen 6 werden bei der Herstellung des Profilteiles durch Strangpressen oder Strangspritzen gleichzeitig mit diesem Profilteil in einem Stück gefertigt. Die Stege 12 mit den Schraubkanälen 6 erstrecken sich ebenso wie der gesamte Profilteil 2 senkrecht zur Zeichenebene. Die Schenkel 8, 10 weisen im Vergleich mit dem übrigen Teil des Steges 12 eine vergrößerte Querschnittfläche auf. Die äußeren Wände 18 des Profilteiles 2 umschließen die Hohlkammer 4 vollständig und man kann daher den Profilteil 2 als ein geschlossenes Hohlkammer-Profil be zeichnen. Von der Erfindung werden auch solche Profilteile erfaßt, deren Wände über den Umfang nicht vollständig geschlossen sind, wobei gleichwohl eine Hohlkammer mit wenigstens einem Steg vorhanden ist.

Fig. 2 zeigt einen Schnitt durch zwei Profilteile parallel zu deren Längsachse bevor die Verbindung hergestellt worden ist. Es sind die beiden miteinander zu verbindenden Profilteile 2, 3 dargestellt. In den Schraubkanal 6 des Profilteiles 2 ist ein Verbindungselement 20 eingeschraubt, welches als ein Bolzen ausgebildet ist, der an der Außenfläche ein Gewinde 21 aufweist. Die Querschnittfläche des Bolzens ist größer als die Querschnittfläche des Steges 12. Das derart ausgebildete Verbindungselement wird nachfolgend der Einfachheit halber als Bolzen 20 bezeichnet. Die Stirnflächen 22, 23 der die Hohlkammern 4, 5 umgebenden Außenwände 18, 19 der Profilteile 2, 3 stehen einander gegenüber. Der Bolzen 20 steht über die Stirnfläche 22 um die Länge 24 vor. Im Profilteil 3 ist der Steg 13 mit dem Schraubkanal 7 im Inneren der Hohlkammer 5 verkürzt worden, so daß das Ende 26 von der Stirnfläche 23 um die Tiefe 28 versetzt ist. Die Länge 24 ist um eine vorgegebenen Länge 30 größer als die Tiefe 28.

In einer alternativen Ausgestaltung kann die Kürzung des Steges oder Schraubkanales des zweiten Profilteiles unterbleiben. In einem solchen Falle kann der Bolzen 20 kürzer ausgebildet sein, so daß er nur noch mit der Länge 30 über die Stirnfläche 22 des ersten Profilteiles 2 vorsteht. Von besonderer Bedeutung ist hierbei, daß der Bolzen und damit auch die Schweißzone von den Außenwänden 18 der Profilteile einen derart großen seitlichen Abstand aufweisen, daß beim Schweißen das verflüssigte Material nicht in den Bereich der Stirnflächen gelangen kann, wodurch das ordnungsgemäße Verbinden der Profilteile in Frage gestellt wäre.

Zur Herstellung der Verbindung werden die beiden Profilteile 2, 3 mit den Elektroden einer Schweißstromquelle bekannter Bauart verbunden. Nach dem Einschalten der Schweißstromquelle werden die beiden Profilteile 2, 3 aufeinander zubewegt, wobei die Endfläche 34 des Bolzens in die unmittelbare Nähe des Endes 26 des Steges 13 mit den Schenkeln des Schraubkanales 7 gelangt. Die Profilteile 2 und 3 werden mit einer vorgegebenen Kraft bei diesem Stumpf- oder Abbrennschweißen aneinandergepreßt, wobei die Endfläche 34 an den Schenkeln am Schraubkanal 7 anliegt. In Folge des sich ausbildenden Lichtbogens bzw. des zwischen dem Bolzen 20 und dem Steg 13 des Profilteiles 3 fließenden Stromes und der hierbei entstehenden Wärme erfolgt die Verschweißung. Maßgebend ist hierbei, daß aufgrund der oben angegebenen Länge 30 die Verschweißung ausschließlich zwischen dem Bolzen 20 des Profilteiles 2 und dem Steg 13 bzw. dem Schraubkanal 7 des anderen Profilteiles 3 erfolgt, wobei die Stirnflächen 22, 23 nicht miteinander verschweißt werden. Zweckmäßig wird die Schweißstromquelle abgeschaltet, bevor die beiden Stirnflächen 22, 23 so nahe zueinander kommen, daß über diese Stirnflächen ein Strom fließen könnte. Es hat sich bewährt, den Strom abzuschalten, wenn die Stirnflächen 22, 23 sich auf einen Abstand von 2 bis 0,5 mm, bevorzugt etwa 1 mm, genähert haben. Durch das Abkühlen der Schweißzone erfolgt eine Schrumpfung derart, daß nach dem Abkühlen die Stirnflächen 22, 23 im wesentlichen dicht und unmittelbar aneinanderliegen.

Fig. 3 zeigt einen Schnitt durch die fertige Verbindungsanordnung nach dem Schweißen. Es ist nunmehr der den Bolzen 20 umgebende ringförmige Schweißwulst 36 zu erkennen, wobei die Stirnflächen 22, 23 der beiden Profilteile 2, 3 dicht und ohne Bildung eines Spaltes aneinanderliegen. Der ringförmige Schweißwulst 36 liegt zu den Stirnflächen 22, 23 der Außenwände 18, 19 beabstandet, zumal der Bolzen 20 nicht nur um die Länge 30, sondern um die Länge 24 über die Stirnfläche 22 des Profilteiles 2 vorstand. Hierdurch wird sichergestellt, daß beim Schweißen weder Schweißperlen, Schweißspritzer oder allgemein flüssiges bzw. plastisches Material zu den Stirnflächen 22 oder 23 gelangen, wodurch eine dichte Anlage der Stirnflächen in nachteiliger Weise verhindert würde. Die Länge 30 bzw. die Differenz der genannten Länge 24 und der Tiefe 28 werden derart vorgegeben, daß eine gute Stumpfschweißverbindung erreicht wird. Auch die Querschnittsfläche des Bolzens 20 ist hierbei zu berücksichtigen, wobei sich in der Praxis eine Querschnittsfläche zwischen 50 und 100 Quadratmillimeter als zweckmäßig erwiesen hat. Weisen die Profilteile 2, 3 bzw. die Stege 12, 13 und/oder die Schenkel 8, 10 eine Wanddikke von 2 mm auf, so wird die Länge 24 zweckmäßig in der Größenordnung von 17 mm vorgegeben, während die Tiefe 28 näherungsweise 10 mm groß ist. Die genannte Länge 30 liegt hierbei also in der Größenordnung von 7 mm und eine funktionssichere Schweißverbindung wird erreicht.

Damit die Schweißung ausschließlich zwischen der Endfläche 34 und dem Steg 13 erfolgt, weist der Bolzen 20 zur Innenwandung 15 einen hinreichend großen Abstand 37 auf. Auch der Schweißwulst 36 weist zur Innenwandung 15 einen Mindestabstand 38 auf. Damit wird vermieden, daß im Bereich der Innenwandung 15 des Profilteiles 3 eine unzulässige Verschweißung und/oder Erwärmung auftritt. Des weiteren wird sichergestellt, daß das beim Schweißen erwärmte Material sich ungehindert quer zur Längsachse 43 ausbreiten kann und eine unzulässige Erwärmung der Innenwandung bzw. des Profilteiles vermieden wird.

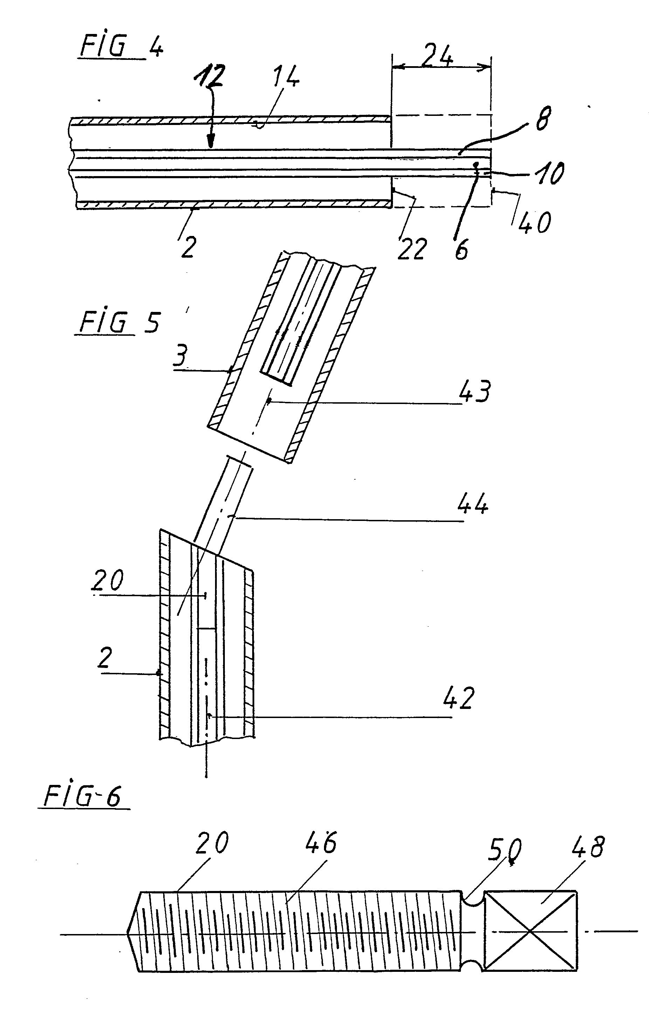

Fig. 4 zeigt eine Alternative, die keinen zusätzlichen Bolzen erfordert. Wie durch die gestrichelten Linien angedeutet, hatte der Profilteil 2 ursprünglich eine Stirnfläche 40. Der Profilteil 2 wurde jedoch gekürzt, wobei vom Steg 12 nur die Schenkel 8, 10 des Schraubkanales 6 in der dargestellten Weise stehenblieben und über die nun vorhandene Stirnfläche 22 mit der Länge 24 vorstehen. Das Verbindungselement wird also durch den stehengebliebenen Teil des Steges gebildet und ist einteilig mit dem Profilteil 2. Dieser stehengebliebene Bereich des Steges weist eine nur an einer Seite geöffnete kreisringförmige Quuerschnittfläche auf, welche größer ist als der abgetragene Teil des Steges. Der stehengebliebene Teil, also quasi der den Schraubkanal bildende Teil weist beim Einführen in die Hohlkammer des anderen Profilteiles einen entsprechenden Abstand auf. Beim Schweißen kann sich daher ein ringför miger Schweißwulst ausbilden, der den stehengebliebenen Teil des Steges, oder allgemein das Verbindungselement ringförmig umgeht. Vom Steg 12 ist zweckmäßig auch der der ursprünglichen Innenwandung 14 nächstliegende Teil abgetragen worden, damit eine ordnungsgemäße Schweißverbindung zwischen der Endfläche 34 und dem Schraubkanal des anderen Profilteiles erfolgen kann, ohne daß hierbei ein Stromfluß und eine Erwärmung zur Innenwandung des anderen Profilteiles hin erfolgt.

Fig. 5 zeigt ein Ausführungsbeispiel, gemäß welchem die Längsachsen 42, 43 der beiden Profilteile 2, 3 nicht miteinander fluchten, sondern einen Winkel zueinander aufweisen. Nunmehr ist das Verbindungselement 20 als ein abgewinkelter Bolzen ausgebildet, wobei im übrigen die vorstehend genannten Längen, Tiefen und Randbedingungen entsprechend eingehalten werden. Beim Schweißen erfolgt eine Relativbewegung in Richtung der Längsachse 43 des Profilteiles 3. Der Profilteil 3 und der abgewinkelte Teil 44 des Bolzens 20 werden in Richtung der Längsachse 43 mit einer vorgebbaren Kraft beim Schweißen gegeneinandergepreßt. Hierzu wird beispielsweise der Profilteil 2 in einer geeigneten Spannvorrichtung festgehalten und der Profilteil 3 in Hichtung der Längsachse 43 mittels geeigneten Führungsmitteln auf den abgewinkelten Teil 44 des Bolzens 20 zubewegt.

Fig. 6 zeigt vergrößert den bereits erläuterten Bolzen 20 vor dessen Einschrauben in den Schraubkanal des Profilteiles. Der Bolzen 20 ist als ein Gewindebolzen mit einem selbstschneidenden Außengewinde 46 ausgebildet und weist einen als Vierkant oder Sechskant ausgebildeten Kopf 48 auf. An dem Kopf kann daher ohne weiteres ein Schraubschlüssel oder ein geeignetes Werkzeug angesetzt werden, um den Bolzen in den Schraubkanal des Profilteiles einzuschrauben. Zwischen dem Teil des Bolzens 20 mit dem Außengewinde 46 und dem Kopf 48 ist eine Ringnut 50 vorhanden, welche als Soll-Bruchstelle ausgebildet ist. Die Ringnut 50 ist in der Weise dimensioniert, daß der Bolzen zuverlässig in den dafür vorgesehenen Schraubkanal eingeschraubt werden kann. Ist die erforderliche Einschraubtiefe erreicht, wird der Kopf 48 abgeknickt, wobei nunmehr im Bereich der Ringnut 50 die Bruchstelle liegt. Es ist ersichtlich, daß sich nach dem Abbrechen des Kopfes 48 die obengenannte Endfläche das Bolzens 20 im Bereich der Ringnut 50 befindet.

## Bezugszeichenliste

2, 3 Profilteil
4, 5 Hohlkammer
6, 7 Schraubkanal
8, 10 Schenkel
12, 13 Steg
14, 15 Innenwandung
16 Mittenebene
18, 19 Wand
20 Verbindungselement
21 Gewinde
22, 23 Stirnfläche
24 Länge
26 Ende von 12
28 Tiefe
30 Länge
32 Schweißzone
33 Abstand von 32 zu 22
34 Endfläche
36 Schweißwulst
37 seitlicher Abstand
40 Stirnfläche
42, 43 Längsachse
44 abgewinkelter Teil von 20
46 Außengewinde
48 Kopf
50 Ringnut

## Ansprüche

1. Verbindungsanordnung von Profilteilen (2, 3) insbesondere eines Rahmens eines Schrankes oder einer Trennwand für Dusch-oder Badezimmer, enthaltend wenigstens einen in einer Hohlkammer (4) des ersten Profilteils (2) angeordneten Steg (12), und ferner ein Verbindungselement (20), mittels welchem der zweite Profilteil (3) und der Steg (12) verbunden sind, dadurch gekennzeichnet, daß das Verbindungselement (20) mit dem Steg (12) des ersten Profilteils (2) fest verbunden ist und von dessen Stirnfläche (22) beabstandet ist, daß das Verbindungselement (20) in der Hohlkammer (5) des zweiten Profilteils (3) über eine Schweißzone (32) mit dem Steg (13) des zweiten Profilteils (3) verbunden ist und daß die in der Hohlkammer (5) des zweiten Profilteils (3) angeordnete Schweißzone (32) zu den bevorzugt aneinanderliegenden Stirnflächen (22, 23) der beiden Profilteile (2, 3) insbesondere in Richtung der Längsachse (43) des zweiten Profilteils (3) einen Abstand (33) aufweist.

2. Verbindungsanordnung nach Anspruch 1, dadurch gekennzeichnet, daß das Verbindungselement (20) vor dem Schweißen wenigstens in einer Länge (30) über die Stirnfläche (22) des ersten Profilteils (2) vorsteht und nach dem Schweißen in die Hohlkammer (5) des zweiten Prorilteils (3) hineinragt, wobei die genannte Länge (30) größer ist als der Abstand (33) der Schweißzone (32) zu den im wesentlichen dicht aneinanderliegenden Stirnflächen (22, 23) der beiden Profilteile (2, 3).

3. Verbindungsanordnung nach Anspruch 1 oder 2, dadurch gekennzeichnet, daß vor dem Schweißen das Verbindungselement (20) in einer Länge (24) über die Stirnfläche (22) des ersten Profilteils (2) vorsteht und die Stirnfläche (26) in einer Tiefe (28) von der Stirnfläche (23) zurückversetzt ist, wobei die Länge (24) größer ist als die Tiefe (28).

4. Verbindungsanordnung, insbesondere nach einem der Ansprüche 1 bis 3, dadurch gekennzeichnet, daß die Schweißzone (32) mit dem Schweißwulst (36) zur äußeren Wand (18) des Profilteils (3) einen Abstand aufweist.

5. Verbindungsanordnung nach einem der Ansprüche 1 bis 4, dadurch gekennzeichnet, daß eine Schweißverbindung ausschließlich in der genannten Schweißzone (32) im Inneren der Hohlkammer (5) vorhanden ist, wobei während des Schweißens der Strom abgeschaltet wurde, als die Stirnflächen (22, 23) nur noch einen vorgegebenen kleinen Abstand zueinander aufwiesen.

6. Verbindungsanordnung nach einem der Ansprüche 1 bis 5, dadurch gekennzeichnet, daß der Steg (12) oder das Verbindungselement (20) des einen Profilteiles (2) von der Innenwandung (15) des anderen Profilteiles (3) orthogonal zur Längsachse (43) beabstandet sind.

7. Verbindungselement nach einem der Ansprüche 1 bis 6, dadurch gekennzeichnet, daß das Verbindungselement (20) als ein Bolzen ausgebildet ist, der in einen Schraubkanal (6) des Steges (12) des ersten Profilteils (2) eingeschraubt ist.

8. Verbindungsanordnung nach einem der Ansprüche 1 bis 7, dadurch gekennzeichnet, daß das Verbindungselement (20) einteilig mit dem Steg (12) des ersten Profilteils (2) ausgebildet ist und durch Entfernen eines Teiles der äußeren Wand (18) wenigstens um die Länge (30) zweckmäßig um die noch größere Länge (24), hergestellt ist.

9. Verbindungsanordnung nach einem der Ansprüche 1 bis 8, dadadurch gekennzeichnet, daß die Schweißzone (32) oder der Schweißwulst (36) in der Hohlkammer (5) durch Anpressen des Bolzens (15) bzw. des Steges (12) des ersten Profilteiles (2) an den Steg (13) des anderen Profilteiles (3) beim Schweißen gebildet wurden.

10. Verbindungsanordnung nach einem der Ansprüche 1 bis 9, dadurch gekennzeichnet, daß der Steg (12) in der Hohlkammer (4) einen Bereich mit einem erweiterten Querschnitt, insbesondere in Form von Schenkeln (8, 10) des Schraubkanales (6) aufweist, und daß der Steg (12) mit diesem erweiterten Bereich oder mit dem in diesem Bereich befestigten Verbindungselement (20) in die Hohlkammer (5) des anderen Profilteiles (3) hineinragt und mit dessen gleichfalls erweiterten Bereich, insbesondere in Form der Schenkel des Schraubkanals (7), verschweißt ist.

Fig 1

Fig 2

Fig 3

FIG 4

FIG 5

FIG-6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-4 653 127 (H.G. BAUS)<br>* Spalte 5, Zeilen 16-45; Figuren 1,2 *<br>--- | 1 | F 16 B 7/00<br>E 06 B 3/96 |
| D,A | DE-U-7 427 039 (H. BREUER)<br>* Anspruch 1; Figuren 1,7,9,10 *<br>--- | 1 | |
| A | US-A-4 160 148 (J.C. JENKINS)<br>* Anspruch 1; Figuren 1-4 *<br>--- | 1 | |
| A | FR-A-2 287 608 (M. NAGASE)<br>* Anspruch 1; Figuren 2,4 *<br>----- | 1 | |

RECHERCHIERTE
SACHGEBIETE (Int. Cl.4)

F 16 B
E 06 B
A 47 K
B 23 K

Der vorliegende Recherchenbericht wurde für alle Patentansprüche erstellt

| Recherchenort | Abschlußdatum der Recherche | Prüfer |
|---|---|---|
| DEN HAAG | 27-04-1989 | ARESO Y SALINAS J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
    Dokument

EPO FORM 1503 03.82 (P0403)